Europäisches Patentamt

European Patent Office

Office européen des brevets

(11) Publication number: **0 340 958**
**A2**

## EUROPEAN PATENT APPLICATION

(21) Application number: **89304079.0**

(22) Date of filing: **24.04.89**

(51) Int. Cl.⁴: **G09F 7/00 , B29C 65/02**

(30) Priority: **04.05.88 GB 8810491**

(43) Date of publication of application:
**08.11.89 Bulletin 89/45**

(84) Designated Contracting States:
**AT BE CH DE ES FR GB GR IT LI LU NL SE**

(71) Applicant: **CORRUPLAST LIMITED**
**Correx House Morelands Trading Estate**
**Bristol Road**
**Gloucester, GL1 5RZ(GB)**

(72) Inventor: **Haines, Clive Peter**
**Woodcroft**
**Tibberston Gloucestershire, GL19 3AQ(GB)**

(74) Representative: **Johnson, Terence Leslie et al**
**Edward Evans & Co. Chancery House 53-64**
**Chancery Lane**
**London WC2A 1SD(GB)**

(54) **Display board and method and apparatus for making same.**

(57) A display panel made of two sheets 11 of plastic material welded together at the sides only allows a post to be passed through the central gap to which it can then be secured as by a bolt. The panels 11 are welded in a continuous process in apparatus having infra-red heaters 115 which heat the panels locally in strips, at adjacent edge regions, the surrounding parts of the panels 11 being cooled by cooling blocks 102, 103, 104, 117 so that the major surfaces are cooled and remain undistorted during heating. The panels can then be printed.

FIG.1.

## DISPLAY BOARD AND METHOD AND APPARATUS FOR MAKING SAME

This invention relates to display boards of plastics materials such as polypropylene, and to a method and apparatus for making same. Such boards have been increasingly used since they are more weather resistant than boards of paper or other fibre products and are generally cheaper and lighter than wood and metal boards. When a board is double sided and is to be supported on a post, there is the problem of fixing the board to the post without obscuring the display. If the post is located between the two sides of the display, then the side edgees of the board are preferably to be secured together. Adhesive tape has been used, but such tape is notoriously short lived and has poor weather resistance, so that the board will probably become unsecured at the edges in a short time. Similarly adhesives applied between boards have had poor performance with polypropylene in the open air.

It is an object of the invention to seek to mitigate this disadvantage.

According to one aspect of the invention there is provided a display board of plastics material, comprising two panels separable at their centres to receive a supporting member and secured together at their side edges by plastic welding. If the panels are of fluted material, that is two surface sheets with spacer sheet material between them forming the space between the surface sheets into a series of substantially parallel compartments, the panels are preferably welded together at their adjacent surface sheets, without affecting the configuration of the spacer sheet material or the non-adjacent surface sheets. Welding gives a secure and lasting bond to the panel. When polypropylene is welded, it is possible to control welding conditions (eg the temperature to which the regions are heated or the frequency of the applied radiation) to restrict the flow of material to the facing surface sheets, without affecting the other portions of the panel, thus preserving the outward appearance of the panel, in other words, there is no deformation of the material of the panels during welding.

Typically, the welded region extends over the extreme one or two centimetres at the sides of the panel.

According to a second aspect of the invention there is provided a method of making a display board comprising the steps of providing two sheets of plastic material with facing major surfaces in parallel and spaced apart, means for heating the panels adjacent lateral edges thereof, at facing major surfaces without touching the panels, providing means to maintain major surfaces of the panels cool around the heated part, and providing means to bring heated panels parts together to weld them whilst maintain- ing the cooling of the opposite major surface.

According to a third aspect of the invention, there is provided apparatus for making a display board of two spaced weldable panels, comprising two heating elements arranged to heat two facing major surfaces of the panels adjacent lateral edges thereof in use and without touching the panels, and cooling means arranged to cool major surfaces of the panels around the heated major surface part whereby distortion of the panels during heating is obviated.

An example of the invention will now be described with reference to the accompanying drawings in which:-

Fig. 1 is a plan of a display panel according to the invention, with its central portion separated to receive a post;

Fig. 2 is a side elevation of the panel of Fig. 1;

Fig. 3 is a side elevational view of apparatus for making a display panel of Figs. 1 and 2;

Fig. 4 is a end elevational view of apparatus for making a display panel of Figs. 1 and 2;

Fig. 5 is an enlarged partial view of the view of Fig. 4;

Figs. 6 and 7 are respective schematic top plan and side elevational views of part of the apparatus; and

Fig. 8 is a top plan view of the apparatus.

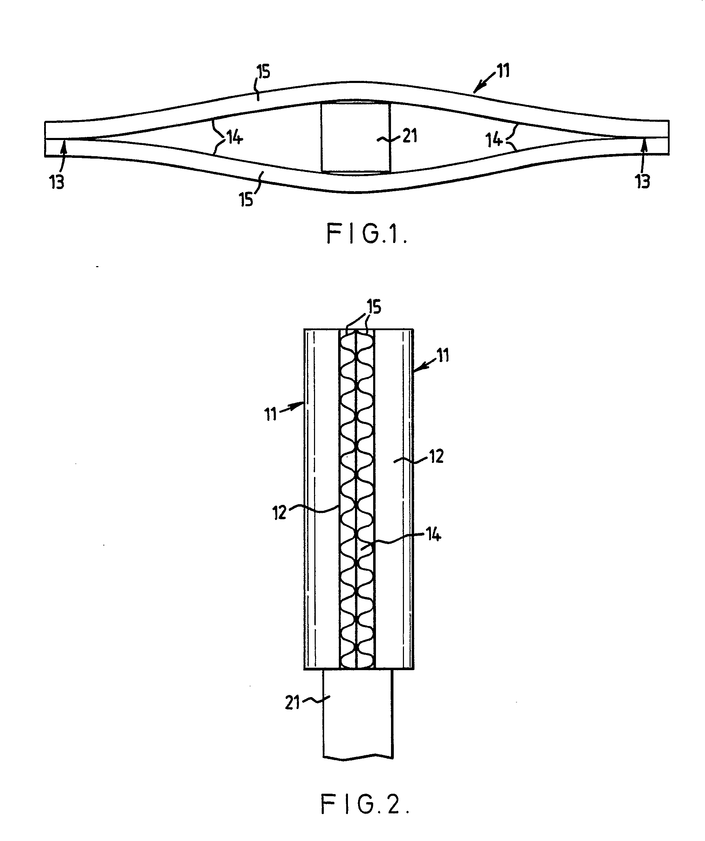

In the drawings, the display board shown in Figs. 1 and 2 comprises two panels 11 of corrugated polypropylene sheet, each with a display on the exterior sheet 12. The panels 11 are separate except at the side edge regions 13 of about 1 to 2 cm width, over which regions they are welded together in such a way that the sheets 14 facing each other are bonded together, without deformation of the spacer sheet material 15 in the interior of each panel 11 or of the exterior sheet 12 bearing the display, so that the display is not distorted by the welding. A support member such as a wooden post is indicated at 21 passing between the central portions 16 of the panels to which the panels can be attached as by securing means such as a bolt passing through aligned holes in the major surfaces of the panels and the post.

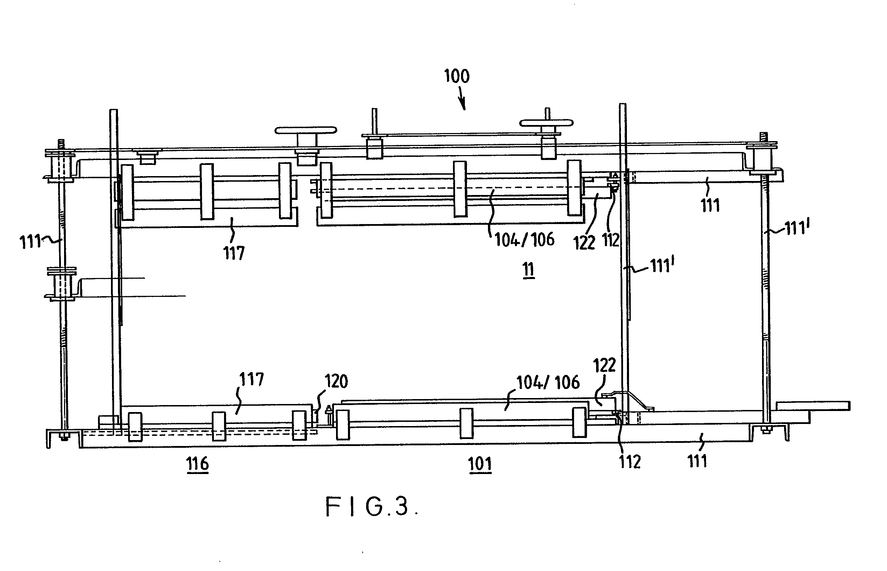

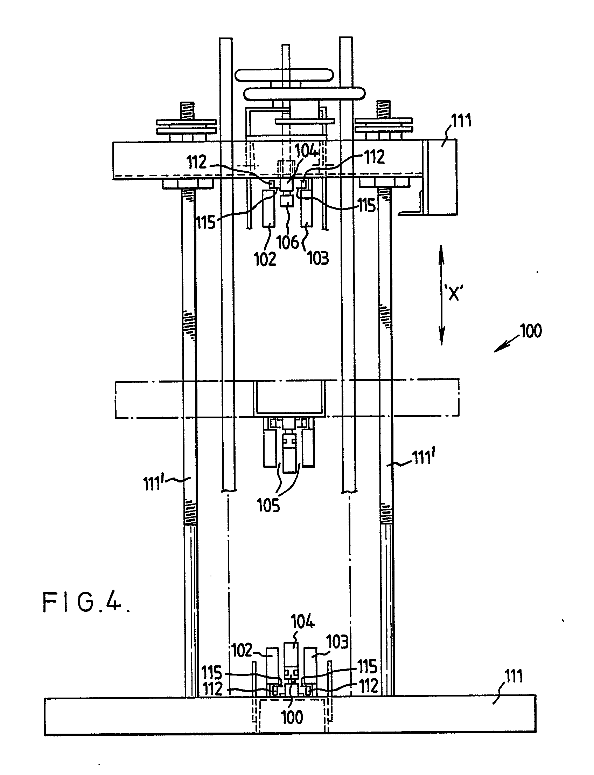

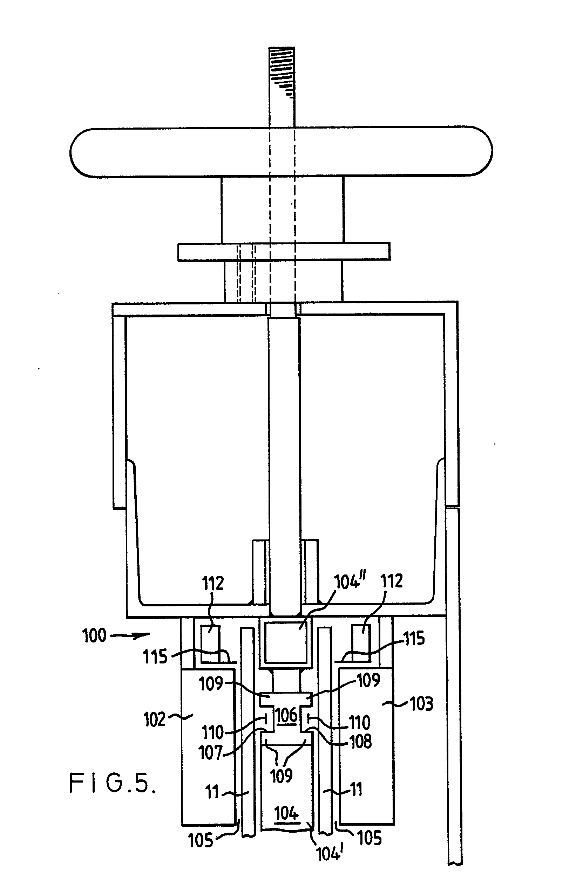

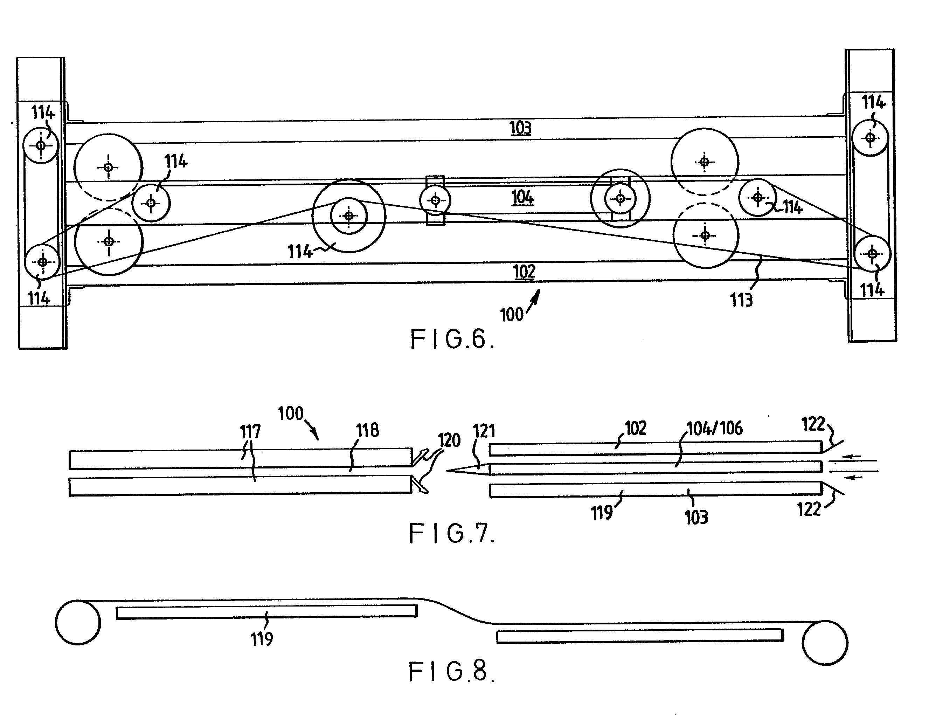

Figs. 3 to 8 show apparatus 100 for making the panels, comprising a region 101 having three elongate cooling members 102, 103, 104 which are spaced apart to define two parallel channels or passageways 105 through which two plans are panels 11 of say plastic such as that sold under the name Correx (Registered Trade Mark) pass, the cooling members 102, 103, 104 being arranged to cool and support the member adjacent edge regions thereof. The intermediate cooling members 104 comprises two parts 104', 104" spaced by a heating means 106 which itself comprises a generally H-shaped block in the opposite recesses 107, 108, between respective limbs 109 of which there are heating elements in the form of elongate infra-red strips 110, there being one strip 110 in each recess 107, 108, the ends of the limbs of the "H" terminating just short of (about 1/16") the plane in which the outer surface of the intermediate cooling block 104 lies. In this way it is ensured that a panels 11 never comes into contact witht the heating strips 110 or block 106. The cooling and heating blocks are mounted in a frame comprising cross members 111 which are adjustable in length as by being on telescopic tubes 111' whereby the vertical (as viewed in Fig. 3) spacing can be adjusted to accommodate panels to be welded, of different width, as shown by the doubled headed arrow "X" on Fig. 4, where an "adjusted" position of the bottom cross member 111 is shown in chaindotted lines. The frame 111 also supports endless means in the form of a chain 112 at top and bottom driven by a drive belt 113 passing round pulleys 114 and having spaced apart tangs 115 projecting at 90° to the length thereof, into the space between two blocks, whereby the tangs 115 pierce the plastic 11 for drawing two boards to be welded through the apparatus 100.

The apparatus 100 also includes a region 116 having just cooling blocks 117, spaced apart by a narrower distance 118 just equal to the combined thickness of two superposed panels 11, the chains 112 having a backing plate 119 in both regions, the one in the region 116 being offset vertically as viewed in Fig. 8 to guide the panels 11 together in that region. The panels 11 are guided into the region by guide means in the form of converging plates 120 on the cooling blocks and a tapered nose 121 on the central block 104 of the region 101, acting as a lead out. There is also guide means in the form of inclined plates 122 at the entry to the region 101.

In use to make the welded display panel of Figs. 1 and 2, the heating elements 110 are heated and the cooling elements cooled 102, 103, 103, 117 as by having cooling water passed through them. The chains 112 are set in motion to draw the panels 11 from right to left as viewed in Fig. 3, and two sheets of material to be welded are engaged by the tangs 115 by being pierced thereby and are drawn into the two gaps 105, the flutes or passageways in the material being vertical, as viewed in Fig. 3. There are chains at top and bottom of the sheets. The gaps 105 are shown exaggerated in Fig. 4, but in practice the major surfaces of the sheets pass through the gaps with very close contact with the facing surfaces of the cooling blocks 102, 103. 104, whilst not touching the elements 110 or the "H"-block 106. As the sheets 11 pass in unison (their respective chains being synchronised) through the gaps 105 in the region 101 a strip adjacent the respective top and botton edge is heated locally to fusing by the infra-red elements 110. When the sheets 1``1 pass into the region 116, guided by the guide means 120 and 121 and forced together by the chains riding overthe backing plates 119, the fused strips are forced together so that the fused material of the strips is also forced together and the sheets 11 are thereby welded along the top and bottom edges. During this process, the cooling blocks 102, 103. 104, 117 maintain the major surface of the sheets 11 cool around the heated parts, and supported and this is enhanced by cooling air being blown through the flutes by an air blowing means at the region 116. The net result is that the sheets 11 are welded together and the major surfaces and the flutes are nevertheless maintained flat and undistorted. The welded sheets then leave the apparatus downstream of the region, and they are trimmed by having the material cut off partially through the welded strips so that material outboard of the strip, including the part with holes from piercing with the tangs 115, falls away. The sheets are then cut at required points in a direction parallel to the flutes to provide the required size of panel. If turned through 90°, the unjoined central parts are then at the top and bottom (Fig. 1). The major surfaces can then have a legend applied thereto such as by printing, eg screen printing, the undistorted major surfaces allowing this to be achieved without wastage and then with good quality control over the finished display panel.

Finally panels may be made and printed, and used as a flag kind of display panel.

The apparatus 100 and method using it to produce display panels can, it will be understood, provide a continuous system of welding and printing as a screen printing apparatus may be located immediately downstream of the apparatus, the sheets to be welded and printed passing through passageways past fixed heating and cooling blocks, through it will be understood too that the apparatus could pass over fixed panels; in both embodiments there is relative movement between the panels to be cooled and the apparatus.

## Claims

1. A display board of plastics material, characterised by two panels separable at their centres to receive a supporting member and secured together at their side edges by plastic welding.

2. A display board according to Claim 1, characterised by the panels each comprising two surface sheets with spacers between them providing a series of substantially parallel compartments between the sheets.

3. A display system. characterised by a display board according to either preceding Claim, and a supporting member inserted therebetween in a direction substantially parallel to the side edges.

4. A display system according to Claim 4, characterised by the two panels and the supporting member being secured together by securing means passing through the panels substantially at right angles to the plane of the major surface thereof.

5. A display system according to Claim 5, characterised by the panels having a through hole formed therein, by the supporting member comprising a post with a hole formed therein aligned with the holes in the panels, and by a bolt being passed through the aligned holes.

6. A method of making a display board, characterised by the steps of providing two sheets of plastic material with facing major surfaces in parallel and spaced apart, by providing means for heating the panels adjacent lateral edges thereof, at facing major surfaces without touching the panels, by providing means to maintain major surfaces of the panels cool around the heated part, and by providing means to bring heated panels parts together to weld them whilst maintaining the cooling of the opposite major surface.

7. A method according to Claim 6, characterised by moving the panels and heating and cooling means relative to one another.

8. A method according to Claim 7, characterised by moving the panels in unison past the heating and cooling means.

9. A method according to Claim 8, characterised by the additional step of providing air cooling interiorly of the panels when same comprise fluted plastic board.

10. A method according to Claim 8 or Claim 9, characterised by the step of moving the panels comprising providing endless means for gripping the panels and moving same.

11. A method according to Claim 10, characterised by the gripping step comprising providing tangs on an endless chain arranged to pierce a panel and move it with the chain.

12. A method according to Claim 11, characterised by the step of cutting off pierced edges of the panels after welding.

13. Apparatus for making a display board of two spaced weldable panels, characterised by two heating elements arranged to heat two facing major surfaces of the panels adjacent lateral edges thereof in use and without touching the panels, and by cooling means arranged to cool major surfaces of the panels around the major surface parts whereby distortion of the panels during heating is obviated.

14. Apparatus according to Claim 13, characterised by means to move panels in use in unison past the heating means.

15. Apparatus according to Claim 14, characterised by the means comprising endless means for gripping an edge of a panel and moving same.

16. Apparatus according to Claim 15, characterised by the gripping means comprising spaced apart tangs carried by the endless means and arranged to pierce a panel and move it with the endless means.

17. Apparatus according to any of Claims 13 to 16, characterised by the heating means comprising infra-red heating means.

18. Apparatus according to Claim 17, the infra-red heating means comprising elongate elements mounted in opposite recesses of a mounting block.

19. Apparatus according to Claim 18, characterised by the mounting block being of generally H-configuration in cross-section.

20. Apparatus according to any of Claims 13 to 21, characterised by means for moving heated surfaces of the panels into contact in order to weld same together.

21. Apparatus according to any of Claims 13 to 20, characterised by means to adjust the spacing of heating and cooling means whereby different widths of panel may be weldable in the apparatus.

FIG.1.

FIG.2.

FIG.3.

FIG.4.

FIG.5.

100 →

112    104″    112

115                115

109        109

102                103

110    106    110

107        108

11    109    11

105        105

104

104′

FIG.6.

FIG.7.

FIG.8.

EP 0 340 958 A2